# EUROPEAN PATENT APPLICATION

(11) **EP 4 336 433 A1**
(43) Date of publication of application: **13.03.2024**
(21) Application number: 22841187.2
(22) Date of filing: 29.06.2022
(51) Int. Cl.: G06Q 20/38, G06Q 20/40

(54) **USER DATA MANAGEMENT METHOD AND RELATED DEVICE**

(30) Priority: 13.07.2021 CN 202110790267
(71) Applicant: Huawei Technologies Co., Ltd., Shenzhen, Guangdong 518129 (CN)
(72) Inventor: YAN, Xueqiang, Shenzhen, Guangdong 518129 (CN); ZHAO, Mingyu, Shenzhen, Guangdong 518129 (CN); WU, Jianjun, Shenzhen, Guangdong 518129 (CN); YAN, Min, Shenzhen, Guangdong 518129 (CN)
(74) Representative: Epping - Hermann - Fischer
(86) International application number: PCT/CN2022/102191
(87) International publication number: WO 2023/284549

(57) **Abstract**

Embodiments of this application disclose a user data management method and a related device, to improve user information security. The method according to embodiments of this application includes: A data request device sends a first message, where the first message includes a first request, the first request indicates that the data request device requests to access a data storage device, and the first request includes signature information of the data request device and an access type. The data request device receives first permission information, where the first permission information includes proof of permission, the proof of permission indicates that the data request device has permission to access the data storage device, and the permission is related to the signature information of the data request device and the access type. The data request device sends a second request, where the second request includes an access address and the proof of permission.

## Description

This application claims priority to Chinese Patent Application No. 202110790267.5, filed with the China National Intellectual Property Administration on July 13, 2021 and entitled "USER DATA MANAGEMENT METHOD AND RELATED DEVICE", which is incorporated herein by reference in its entirety.

### TECHNICAL FIELD

Embodiments of this application relate to the field of data processing, and in particular, to a user data management method and a related device.

### BACKGROUND

User data management is one of the most core functions of a mobile communications network. Provision of user services and normal operation of a network all depend on a user data management entity and a related procedure. A user data management entity of a mobile network stores user and service subscription-related data, key information, and the like, and is the key to user authentication, authorization, and access control.

In a current core network architecture of 2G to 5G networks, each user has a lot of information, such as subscription information, key information, and service information. The user information is managed together in a centralized single-point user data management device. The user data management device is connected to another control panel network entity or application server, to provide a service of data access. For example, in a core network architecture of a 5G network, user information is managed by a unified data management (Unified Data Management, UDM). The UDM manages network user data in a single network element and can be paired with a user data repository. The user data repository stores the user information, and the UDM is located on a control plane.

Because the user information is managed by the centralized single-point user data management device, a single point of failure and vulnerability to a distributed denial of service (Distributed Denial of Service, DDoS) attack may be caused. Therefore, there is a high data security risk.

### SUMMARY

Embodiments of this application provide a user data management method and a related device, to improve user data security.

According to a first aspect, an embodiment of this application provides a user data management method. The method is applied to a user data management system to manage user data. The system includes a data request device, a data storage device, and a blockchain platform. When the data request device needs to access the data storage device, the user data management system performs a corresponding operation. Specifically, the method includes: The data request device sends a first message to the blockchain platform, where the first message includes a first request, the first request indicates that the data request device requests to access the data storage device, and the first request includes signature information of the data request device and an access type. The data request device receives first permission information sent by the blockchain platform, where the first permission information includes proof of permission, the proof of permission indicates that the data request device has permission to access the data storage device, and the permission is related to the signature information of the data request device and the access type. The data request device sends a second request to the data storage device, where the second request includes an access address and the proof of permission. That is, whether the data request device has the permission to access the data storage device is related to the signature information of the data request device and the access type.

In this possible implementation, before accessing the data storage device, the data request device needs to confirm that the data request device has corresponding permission. Because the blockchain platform has features such as decentralization and immutability, a blockchain platform with functions of authentication and authorization is not subj ect to a risk of a single point of failure, and a small amount of data is lost when a distributed denial of service attack occurs. Therefore, the user data has higher security. In addition, the first request includes the access type, and access information is further detailed, so that the blockchain platform can more accurately determine permission corresponding to the first request.

In a possible implementation of the first aspect, the access type includes data writing and data reading. If the access type is the data writing, the first request further includes the access address; or if the access type is the data reading, the first permission information includes the access address. In a possible implementation of the first aspect, after that the data request device sends a second request to the data storage device, the method further includes: The data request device receives first acknowledgment information sent by the data storage device, where the first acknowledgment information indicates the data storage device to allow access by the data request device.

In this possible implementation, after sending the second request, the data request device receives the first acknowledgment information, so that after requesting to access target user data from the data storage device, the data request device can learn whether the data storage device allows the access by the data request device. In addition, the data request device may further determine, based on the second request, whether to perform a corresponding operation.

In a possible implementation of the first aspect, after that the data request device receives first acknowledgment information sent by the data storage device, the method further includes: The data request device receives second acknowledgment information sent by the data storage device, where the second acknowledgment information indicates that the data storage device has executed a task corresponding to the second request.

In this possible implementation, the data request device can learn whether the data storage device has executed the task corresponding to the second request, and can make a corresponding response accordingly, so that information obtained by the data request device is increased.

In a possible implementation of the first aspect, the method further includes: If a waiting time period is greater than a waiting time period threshold, the data request device determines that a request to access the data storage device is unsuccessful. The waiting time period is a waiting time period elapsing after the data request device sends the second request.

In this possible implementation, after waiting for a time period greater than the preset waiting time period threshold, the data request device determines that the request to access the data storage device is unsuccessful, so that when the data request device does not receive a response from the data storage device, the data request device does not always wait invalidly, and may perform an operation corresponding to a case in which the request to access the data storage device is unsuccessful.

In a possible implementation of the first aspect, the first message further includes a policy update request, the policy update request indicates that the data request device needs to update an access policy for the target user data, the policy update request includes a signature of the data request device and a first access policy, and the method further includes: The data request device receives an update response message, where the update response message indicates that the access policy for the target user data has been updated to the first access policy.

In this possible implementation, the data request device may further modify an access policy for a target user device, and may set an access policy for each piece of user personal data, to implement refined access control on each piece of user personal data.

In a possible implementation of the first aspect, the signature information of the data request device includes signature information of a user device.

In a possible implementation of the first aspect, the access type includes data writing, data deletion, data reading, and data modification.

In a possible implementation of the first aspect, after that the data request device receives acknowledgment information sent by the data storage device, the method further includes: The data request device sends task result information to a user device, where the task result information indicates whether the data request device has completed the task corresponding to a third request. In this possible implementation, the user device can learn whether the data storage device has executed the task corresponding to the second request, and can make a corresponding response accordingly, so that information obtained by the user device is increased.

In embodiments of this application, when the data request device needs to perform an operation on data, the data request device needs to obtain the first permission information sent by the blockchain platform, so that risks of a single point of failure and a network attack can be avoided, and there is high data security. In addition, because the first request sent by the data request device includes the signature information of the data request device, it is ensured that the current operation is authorized by a user, and it is ensured that the user can learn whether a mobile communications network provider uses user information in compliance with requirements, to effectively ensure user information security. The data request device may further modify the access policy for the target user device, and may set the access policy for each piece of user personal data, to implement the refined access control on each piece of user personal data. In addition, in embodiments of this application, the proof of permission POP is not separately stored in a ledger of a blockchain, so that a delay caused by a consensus mechanism for the blockchain is avoided, and data access performance is improved.

According to a second aspect, an embodiment of this application provides a user data management method. The method is applied to a user data management system to manage user data. The system includes a data request device, a data storage device, and a blockchain platform. When the data request device needs to access the data storage device, the user data management system performs a corresponding operation. Specifically, the method includes: The data storage device receives a second request sent by the data request device, where the second request includes an access address and proof of permission. The data storage device sends an access verification request to the blockchain platform, where the access verification request indicates the blockchain platform to determine whether the proof of permission is authentic, and the access verification request includes the proof of permission. The data storage device receives second permission information sent by the blockchain platform, where the second permission information indicates that the proof of permission is authentic. The data storage device executes a corresponding task based on the second request.

In this possible implementation, before accepting access by the data request device, the data storage device needs to obtain confirmation from the blockchain platform that the data request device has corresponding permission. Because the blockchain platform has features such as decentralization and immutability, a blockchain platform with functions of authentication and authorization is not subject to a risk of a single point of failure, and a small amount of data is lost when a network attack occurs. Therefore, the user data has higher security. In addition, a first request includes an access type, and access information is further detailed, so that the blockchain platform can more accurately determine permission corresponding to the first request. In addition, because only information related to the user data is stored in the blockchain platform, and the user data is all stored in the data storage device, a "blockchain bloat problem", a "privacy problem", and a "problem of the right to be forgotten" caused by data immutability are avoided.

In a possible implementation of the second aspect, after that the data storage device receives second permission information, the method further includes: The data storage device sends first acknowledgment information to the data request device, where the first acknowledgment information indicates the storage device to allow access by the data request device.

In this possible implementation, after sending the second request, the data request device receives the first acknowledgment information, so that after requesting to access target user data from the data storage device, the data request device can learn whether the data storage device allows the access by the data request device. In addition, the data request device may further determine, based on the second request, whether to perform a corresponding operation.

In a possible implementation of the second aspect, after that the data storage device executes a corresponding task based on the second request, the method further includes: The data storage device sends access response information to the blockchain platform, where the access response information indicates that the data storage device has executed the task corresponding to the second request.

In a possible implementation of the second aspect, after that the data storage device executes a corresponding task based on the second request, the method further includes: The data storage device sends second acknowledgment information to the data request device, where the second acknowledgment information indicates that the data storage device has executed the task corresponding to the second request.

In embodiments of this application, when the data request device needs to perform an operation on data, the data request device needs to obtain first permission information sent by the blockchain platform, so that risks of a single point of failure and a network attack can be avoided, and there is high data security. In addition, because a first request sent by the data request device includes signature information of the data request device, it is ensured that the current operation is authorized by a user, and it is ensured that the user can learn whether a mobile communications network provider uses user information in compliance with requirements, to effectively ensure user information security. The data request device may further modify an access policy for a target user device, and may set an access policy for each piece of user personal data, to implement refined access control on each piece of user personal data. In addition, in embodiments of this application, the proof of permission POP is not separately stored in a ledger of a blockchain, so that a delay caused by a consensus mechanism for the blockchain is avoided, and data access performance is improved.

According to a third aspect, an embodiment of this application provides a user data management method. The method is applied to a user data management system to manage user data. The system includes a data request device, a data storage device, and a blockchain platform. When the data request device needs to access the data storage device, the user data management system performs a corresponding operation. Specifically, the method includes: The blockchain platform receives a first message, where the first message includes a first request, the first request indicates that the data request device requests to access the data storage device, and the first request includes signature information of the data request device and an access type. The blockchain platform generates proof of permission based on the first request, where the proof of permission indicates that the data request device has permission to access the data storage device. The blockchain platform sends first permission information, where the first permission information includes the proof of permission. The blockchain platform receives an access verification request, where the access verification request indicates the blockchain platform to determine whether the proof of permission is authentic, and the access verification request includes the proof of permission. The blockchain platform sends second permission information, where the second permission information indicates that the proof of permission is authentic.

Before accessing the data storage device, the data request device needs to obtain confirmation from the blockchain platform that the data request device has corresponding permission, that is, obtain the proof of permission generated by the blockchain platform. Because the blockchain platform has features such as decentralization and immutability, a blockchain platform with functions of authentication and authorization is not subject to a risk of a single point of failure, and a small amount of data is lost when a network attack occurs. Therefore, user data has higher security. In addition, the first request includes the access type, and access information is further detailed, so that the blockchain platform can more accurately determine permission corresponding to the first request.

In a possible implementation of the third aspect, that the blockchain platform generates proof of permission based on the first request includes: The blockchain platform generates, based on an identifier of the data request device, an identifier of the data storage device, and a block hash value, the proof of permission by performing a hash operation, where the block hash value is a hash value of a block corresponding to the data request device.

In a possible implementation of the third aspect, after that the blockchain platform sends second permission information to the data storage device, the method further includes: The blockchain platform receives access response information sent by the data storage device, where the access response information indicates that the data storage device has executed a task corresponding to a second request. The blockchain platform records, into a distributed ledger based on the response message, the task that corresponds to the second request and that has been executed by the data storage device.

In this possible implementation, because a transaction such as access to the user data is recorded in the distributed ledger, the user data is not completely managed by a mobile communications network provider. A user has the complete right to know and control personal data, and the user can know whether the mobile communications network provider uses user information in compliance with requirements and effectively protects the user information.

In a possible implementation of the third aspect, the first message further includes a policy update request, the policy update request indicates that the data request device needs to update an access policy for target user data, and the policy update request includes a signature of the data request device and a first access policy, and the method further includes: The blockchain platform updates the access policy for the target user data to the first access policy based on the signature of the data request device and the first access policy. The blockchain platform sends an update response message to the data request device, where the update response information indicates that the blockchain platform has updated the access policy for the target user data.

In this possible implementation, the data request device may further modify the access policy for the target user device, and may set an access policy for each piece of user personal data, to implement refined access control on each piece of user personal data.

In a possible implementation of the third aspect, if the access type is data reading, the first permission information includes an access address.

In embodiments of this application, when the data request device needs to perform an operation on data, the data request device needs to obtain the first permission information sent by the blockchain platform, so that risks of a single point of failure and a network attack can be avoided, and there is high data security. In addition, because the first request sent by the data request device includes the signature information of the data request device, it is ensured that the current operation is authorized by a user, and it is ensured that the user can learn whether a mobile communications network provider uses user information in compliance with requirements, to effectively ensure user information security. The data request device may further modify the access policy for the target user device, and may set the access policy for each piece of user personal data, to implement the refined access control on each piece of user personal data. In addition, in embodiments of this application, the proof of permission POP is not separately stored in a ledger of a blockchain, so that a delay caused by a consensus mechanism for the blockchain is avoided, and data access performance is improved.

According to a fourth aspect, an embodiment of this application provides a user data access policy management method. The method is applied to a user data management system to manage an access policy for user data. The system includes a data request device and a blockchain platform. When the data request device requests to update an access policy for target user data, the user data management system performs a corresponding operation. Specifically, the method includes: The data request device sends a policy update request to the blockchain platform, where the policy update request indicates that the data request device requests to update the access policy for the target user data, and the policy update request includes a signature of the data request device and a first access policy. The data request device receives an update response message sent by the blockchain platform, where the update response message indicates that the access policy for the target user data has been updated to the first access policy.

In this possible implementation, the data request device may further modify the access policy for the target user device, and may set an access policy for each piece of user personal data, to implement refined access control on each piece of user personal data.

According to a fifth aspect, an embodiment of this application provides a user data access policy management method. The method is applied to a user data management system to manage an access policy for user data. The system includes a data request device and a blockchain platform.

When the data request device requests to update an access policy for target user data, the user data management system performs a corresponding operation. Specifically, the method includes: The blockchain platform receives a policy update request sent by the data request device, where the policy update request indicates that the data request device needs to update the access policy for the target user data, and the policy update request includes a signature of the data request device and a first access policy. The method further includes: The blockchain platform updates the access policy for the target user data to the first access policy based on the signature of the data request device and the first access policy. The blockchain platform sends an update response message to the data request device, where the update response information indicates that the blockchain platform has updated the access policy for the target user data.

In this possible implementation, the data request device may further modify the access policy for the target user device, and may set an access policy for each piece of user personal data, to implement refined access control on each piece of user personal data.

According to a sixth aspect, this application provides a data request device. The data request device has a function of implementing the method according to any one of the first aspect or the possible implementations of the first aspect. This function may be implemented by hardware, or may be implemented by hardware executing corresponding software. The hardware or software includes one or more modules, for example, a first sending module, corresponding to the foregoing functions.

According to a seventh aspect, this application provides a data storage device. The data storage device has a function of implementing the method according to any one of the second aspect or the possible implementations of the second aspect. This function may be implemented by hardware, or may be implemented by hardware executing corresponding software. The hardware or software includes one or more modules, for example, a first receiving module, corresponding to the foregoing functions.

According to an eighth aspect, this application provides a blockchain platform device. The blockchain platform device has a function of implementing the method according to any one of the third aspect or the possible implementations of the third aspect. This function may be implemented by hardware, or may be implemented by hardware executing corresponding software. The hardware or software includes one or more modules, for example, a first receiving module, corresponding to the foregoing functions.

According to a ninth aspect, this application provides a data request device. The data request device has a function of implementing the method according to any one of the fourth aspect or the possible implementations of the fourth aspect. This function may be implemented by hardware, or may be implemented by hardware executing corresponding software. The hardware or software includes one or more modules, for example, a sending module, corresponding to the foregoing functions. According to a tenth aspect, this application provides a blockchain platform device. The blockchain platform device has a function of implementing the method according to any one of the fifth aspect or the possible implementations of the fifth aspect. This function may be implemented by hardware, or may be implemented by hardware executing corresponding software. The hardware or software includes one or more modules, for example, a receiving module, corresponding to the foregoing functions.

According to an eleventh aspect, this application provides a data request device. The data request device includes at least one processor, a memory, an input/output (input/output, I/O) interface, and computer-executable instructions that are stored in the memory and that can be run on the processor. When the computer-executable instructions are executed by the processor, the processor performs the method according to any one of the first aspect or the possible implementations of the first aspect.

According to a twelfth aspect, this application provides a data storage device. The data storage device includes at least one processor, a memory, an input/output (input/output, I/O) interface, and computer-executable instructions that are stored in the memory and that can be run on the processor. When the computer-executable instructions are executed by the processor, the processor performs the method according to any one of the second aspect or the possible implementations of the second aspect.

According to a thirteenth aspect, this application provides a blockchain platform device. The data storage device includes at least one processor, a memory, an input/output (input/output, I/O) interface, and computer-executable instructions that are stored in the memory and that can be run on the processor. When the computer-executable instructions are executed by the processor, the processor performs the method according to any one of the third aspect or the possible implementations of the third aspect.

According to a fourteenth aspect, this application provides a data request device. The data request device includes at least one processor, a memory, an input/output (input/output, I/O) interface, and computer-executable instructions that are stored in the memory and that can be run on the processor. When the computer-executable instructions are executed by the processor, the processor performs the method according to any one of the fourth aspect or the possible implementations of the fourth aspect.

According to a fifteenth aspect, this application provides a blockchain platform device. The data storage device includes at least one processor, a memory, an input/output (input/output, I/O) interface, and computer-executable instructions that are stored in the memory and that can be run on the processor. When the computer-executable instructions are executed by the processor, the processor performs the method according to any one of the fifth aspect or the possible implementations of the fifth aspect.

According to a sixteenth aspect, this application provides a computer-readable storage medium storing one or more computer-executable instructions. When the computer-executable instructions are executed by a processor, the processor performs the method according to any one of the first aspect or the possible implementations of the first aspect.

According to a seventeenth aspect, this application provides a computer-readable storage medium storing one or more computer-executable instructions. When the computer-executable instructions are executed by a processor, the processor performs the method according to any one of the second aspect or the possible implementations of the second aspect.

According to an eighteenth aspect, this application provides a computer-readable storage medium storing one or more computer-executable instructions. When the computer-executable instructions are executed by a processor, the processor performs the method according to any one of the third aspect or the possible implementations of the third aspect.

According to a nineteenth aspect, this application provides a computer-readable storage medium storing one or more computer-executable instructions. When the computer-executable instructions are executed by a processor, the processor performs the method according to any one of the fourth aspect or the possible implementations of the fourth aspect.

According to a twentieth aspect, this application provides a computer-readable storage medium storing one or more computer-executable instructions. When the computer-executable instructions are executed by a processor, the processor performs the method according to any one of the fifth aspect or the possible implementations of the fifth aspect.

According to a twenty-first aspect, this application provides a computer program product storing one or more computer-executable instructions. When the computer-executable instructions are executed by a processor, the processor performs the method according to any one of the first aspect or the possible implementations of the first aspect.

According to twenty-second aspect, this application provides a computer program product storing one or more computer-executable instructions. When the computer-executable instructions are executed by a processor, the processor performs the method according to any one of the second aspect or the possible implementations of the second aspect.

According to a twenty-third aspect, this application provides a computer program product storing one or more computer-executable instructions. When the computer-executable instructions are executed by a processor, the processor performs the method according to any one of the third aspect or the possible implementations of the third aspect.

According to a twenty-fourth aspect, this application provides a computer program product storing one or more computer-executable instructions. When the computer-executable instructions are executed by a processor, the processor performs the method according to any one of the fourth aspect or the possible implementations of the fourth aspect.

According to twenty-fifth aspect, this application provides a computer program product storing one or more computer-executable instructions. When the computer-executable instructions are executed by a processor, the processor performs the method according to any one of the fifth aspect or the possible implementations of the fifth aspect.

According to a twenty-sixth aspect, this application provides a chip system, where the chip system includes at least one processor, and the at least one processor is configured to implement related functions according to any one of the first aspect or the possible implementations of the first aspect. In a possible design, the chip system may further include a memory, where the memory is configured to store program instructions and data that are necessary for an apparatus for processing an artificial intelligence model. The chip system may include a chip, or may include a chip and another discrete component.

According to a twenty-seventh aspect, this application provides a chip system, where the chip system includes at least one processor, and the at least one processor is configured to implement related functions according to any one of the second aspect or the possible implementations of the second aspect. In a possible design, the chip system may further include a memory, where the memory is configured to store program instructions and data that are necessary for an apparatus for processing data based on an artificial intelligence model. The chip system may include a chip, or may include a chip and another discrete component.

According to a twenty-eighth aspect, this application provides a chip system, where the chip system includes at least one processor, and the at least one processor is configured to implement related functions according to any one of the third aspect or the possible implementations of the third aspect. In a possible design, the chip system may further include a memory, where the memory is configured to store program instructions and data that are necessary for an apparatus for processing data based on an artificial intelligence model. The chip system may include a chip, or may include a chip and another discrete component.

According to a twenty-ninth aspect, this application provides a chip system, where the chip system includes at least one processor, and the at least one processor is configured to implement related functions according to any one of the fourth aspect or the possible implementations of the fourth aspect. In a possible design, the chip system may further include a memory, where the memory is configured to store program instructions and data that are necessary for an apparatus for processing an artificial intelligence model. The chip system may include a chip, or may include a chip and another discrete component.

According to a thirtieth aspect, this application provides a chip system, where the chip system includes at least one processor, and the at least one processor is configured to implement related functions according to any one of the fifth aspect or the possible implementations of the fifth aspect. In a possible design, the chip system may further include a memory, where the memory is configured to store program instructions and data that are necessary for an apparatus for processing data based on an artificial intelligence model. The chip system may include a chip, or may include a chip and another discrete component.

According to the foregoing technical solutions, it can be learned that embodiments of this application have the following advantages.

In embodiments of this application, when a data request device needs to perform an operation on data, the data request device needs to obtain first permission information sent by a blockchain platform, so that risks of a single point of failure and a network attack can be avoided, and there is high data security. In addition, because a first request sent by the data request device includes signature information of the data request device, it is ensured that the current operation is authorized by a user, and it is ensured that the user can learn whether a mobile communications network provider uses user information in compliance with requirements, to effectively ensure user information security. The data request device may further modify an access policy for a target user device, and may set an access policy for each piece of user personal data, to implement refined access control on each piece of user personal data. In addition, in embodiments of this application, proof of permission POP is not separately stored in a ledger of a blockchain, so that a delay caused by a consensus mechanism for the blockchain is avoided, and data access performance is improved.

### BRIEF DESCRIPTION OF DRAWINGS

FIG. 1 is a schematic diagram of a network architecture of a user data architecture of a/an 2G/3G/4G/IMS network;
FIG. 2 is a schematic diagram of a network architecture of a user data architecture of a 5G network;
FIG. 3 is a schematic diagram of a scenario of a user data management method according to an embodiment of this application;
FIG. 4 is a schematic flowchart of a user data management method according to an embodiment of this application;
FIG. 5 is a schematic diagram of a network architecture of an on-chain transaction record data model and an off-chain user data model according to an embodiment of this application;
FIG. 6 is another schematic flowchart of a user data management method according to an embodiment of this application;
FIG. 7 is a schematic diagram of a structure of a data request device according to an embodiment of this application;
FIG. 8 is a schematic diagram of a structure of a data storage device according to an embodiment of this application;
FIG. 9 is a schematic diagram of a structure of a blockchain platform device according to an embodiment of this application;
FIG. 10 is a schematic diagram of another structure of a data request device according to an embodiment of this application;
FIG. 11 is a schematic diagram of another structure of a blockchain platform device according to an embodiment of this application;
FIG. 12 is a schematic diagram of another structure of a data request device according to an embodiment of this application;
FIG. 13 is a schematic diagram of another structure of a data storage device according to an embodiment of this application;
FIG. 14 is a schematic diagram of another structure of a blockchain platform device according to an embodiment of this application;
FIG. 15 is a schematic diagram of another structure of a data request device according to an embodiment of this application;
FIG. 16 is a schematic diagram of another structure of a blockchain platform device according to an embodiment of this application;
FIG. 17 is a schematic diagram of a structure of a user data management system according to an embodiment of this application; and
FIG. 18 is a schematic diagram of another structure of a user data management system according to an embodiment of this application.

### DESCRIPTION OF EMBODIMENTS

Embodiments of this application provide a user data management method and a related device, to improve user information security.

The following describes embodiments of this application with reference to accompanying drawings. It is clear that, the described embodiments are merely a part rather than all of embodiments of this application. A person of ordinary skill in the art may know that, with evolution of technologies and emergence of a new scenario, technical solutions according to embodiments of this application are also applicable to similar technical problems.

In the specification, claims, and the accompanying drawings of this application, the terms "first", "second", and so on are intended to distinguish between similar objects but do not necessarily indicate a specific order or sequence. It should be understood that data termed in such a way is interchangeable in a proper circumstance, so that embodiments described herein can be implemented in other orders than the order illustrated or described herein. In addition, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

User data management is one of the most core functions of a mobile communications network. Provision of user services and normal operation of a network all depend on a user data management entity and a related procedure. A user data management entity of a mobile network stores user and service subscription-related data, key information, and the like, and is the key to user authentication, authorization, and access control.

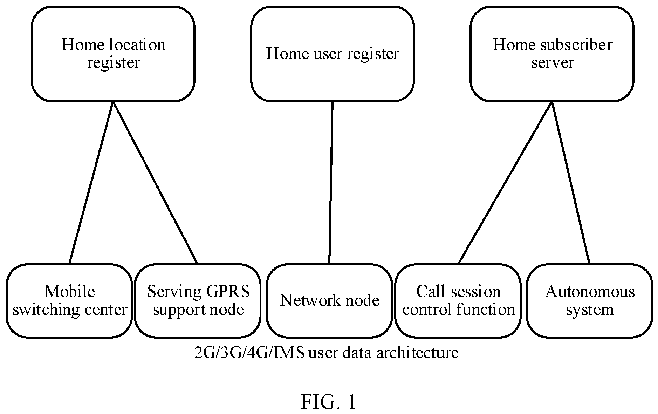

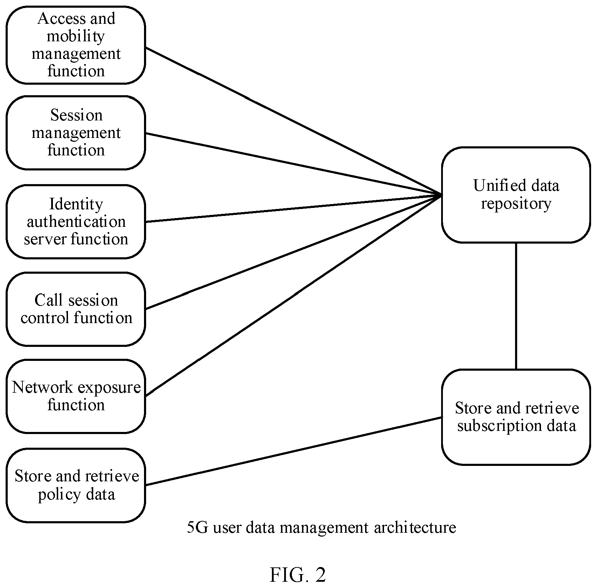

In a current core network architecture of 2G to 5G networks, each user has a lot of information, such as subscription information, key information, and service information. The user information is processed together in a centralized single-point user data management device. The user data management device is connected to another control panel network entity or application server, to provide services such as data access and storage and retrieval. As shown in FIG. 1, for example, in 2G, 3G, 4G, and internet protocol multimedia system (IP Multimedia Subsystem, IMS) architectures, user data management entities are home location registers (Home Location Registers, HLRs) and home subscriber servers (Home Subscriber Servers, HSSs). These entities interface with another control plane network functional entity or application server, to provide access and storage and retrieval services. As shown in FIG. 2, for example, in a core network architecture of a 5G network, user information is managed by a unified data management (Unified Data Management, UDM). The UDM manages network user data in a single element and can be paired with a user data repository. The user data repository stores the user information, and the UDM is located on a control plane.

Based on the foregoing mobile communications network, the following describes a user data management method according to embodiments of this application.

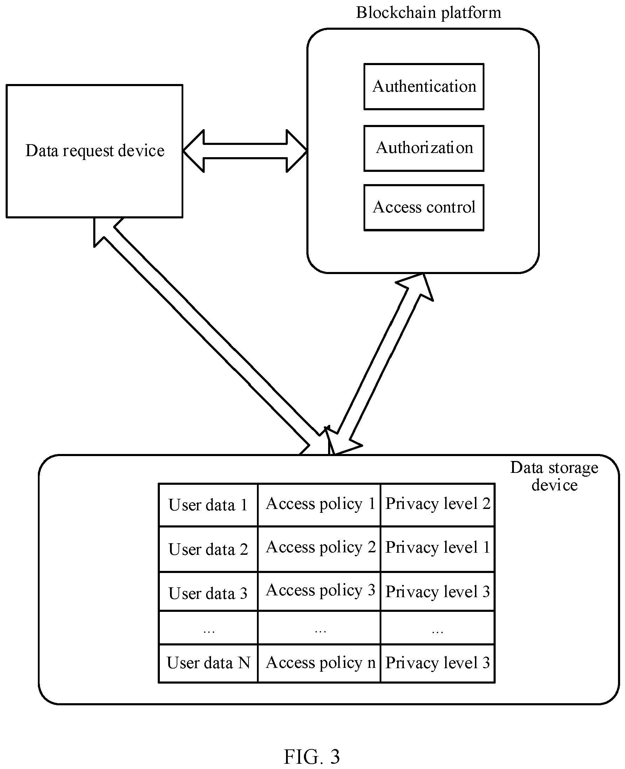

As shown in FIG. 3, an embodiment of this application provides a user data management method. A user data management system in this application includes a data request device, a blockchain platform, and a data storage device. The data request device is a device that needs to perform a corresponding operation on user data, and may be a device such as a data subject (Data Subject, DS), a data controller (Data Controller, DC), or a data processor (Data Processor, DP), or may be a user device, an access network device, or a core network element. The user device may be a terminal device such as a notebook computer, a tablet computer, a computer, an LTE assistant terminal, an NR assistant terminal, an assistant, a semi-active tag, an active tag, a wireless relay station, an LTE mobile phone, or an NR mobile phone. The access network device may be an access network device such as a macro base station, a pole base station, a long term evolution (long term evolution, LTE) base station, an evolved base station (evolved NodeB, eNB), a wireless relay (Relay) station, a femto base station, a pico base station, or a next generation base station (next generation NodeB, gNB). The core network element may be a core network element such as an identity authentication server or a session management server. Embodiments of this application is applicable to an existing 5G system, and is also applicable to various future communications systems and scenarios, for example, internet of vehicles, massive user access, satellite communications, and cellular communications.

The blockchain platform is configured to store a data operation, a policy management transaction, and a data pointer. The data pointer points to user data stored in the data storage device. Specifically, in one aspect, the blockchain platform implements decentralization, and implements access authentication, authorization, and access control logic, and in another aspect, the blockchain platform records all data operations and policy management records in an immutable distributed ledger. The access record includes a storage address of personal user data and an access policy for the personal user data. In embodiments of this application, a centralized trust mode is eliminated using features such as decentralization, immutability, traceability, and transparency of the blockchain platform. To be specific, the blockchain platform acts as an authentication and authorization server, and all operations on the data request device are authenticated and authorized by the blockchain platform. In addition, a smart contract deployed on a blockchain is responsible for automated access control management, and the blockchain is responsible for an immutable log system, configured to record any access operation on off-chain data. In addition, the blockchain platform may further generate proof of permission. In embodiments of this application, the proof of permission POP is not separately stored in a ledger of a blockchain, so that a delay caused by a consensus mechanism for the blockchain is avoided, and data access performance is improved. The data storage device is configured to store personal data of a user, and the personal data of the user is not stored on the blockchain platform, to resolve a "blockchain bloat problem", a "privacy problem", and a "problem of the right to be forgotten" caused by data immutability that are of the blockchain platform. In addition, user data stored in the data storage device has a corresponding privacy level, and the privacy level may be set by the user through a user device. User data of different privacy levels has different requirements on permission of an access request. Therefore, each piece of user data has a corresponding access policy. For example, user data whose privacy level is greater than 2 is not allowed to be accessed by any device, user data whose privacy level is 2 is allowed to be accessed only by a user device that serves as a data request device, and so on. A service operator provides a user data model and privacy level reference. The user finally determines access permission for each user device, for example, determines whether to grant the access permission based on a privacy level.

In embodiments of this application, the data request device can initiate an access request for the user data, or initiate modification of an access policy for the user data. The following describes the two cases separately. 1. The data request device initiates an operation request for the user data.

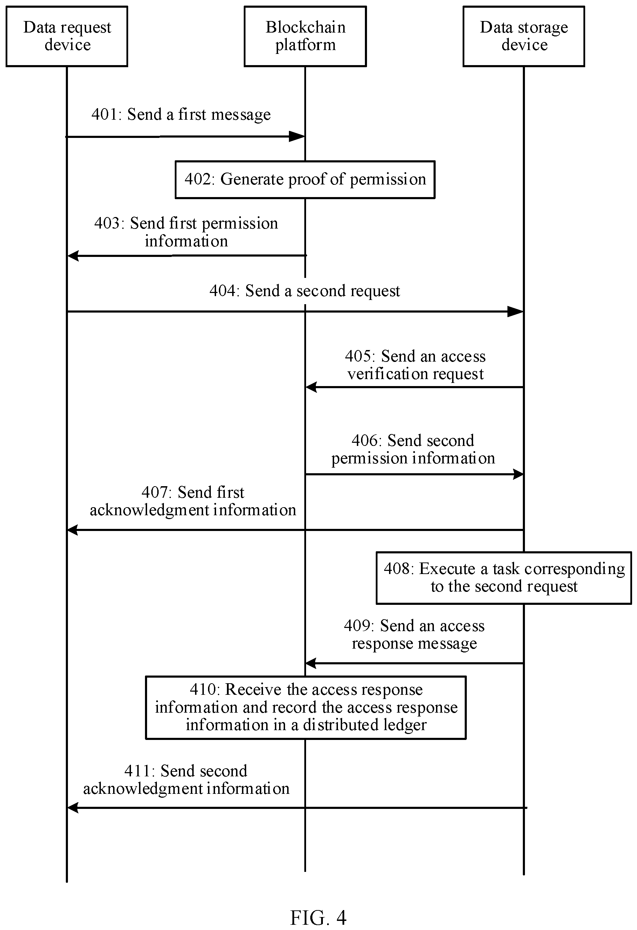

As shown in FIG. 4, a procedure of a user data management method according to an embodiment of this application includes the following steps.

401: The data request device sends a first message to the blockchain platform.

The data request device sends the first message to the blockchain platform, where the first message includes a first request, the first request indicates that the data request device requests to access the data storage device, the first request includes signature information of the data request device and an access type, and the signature information of the data request device is used by the blockchain platform to determine permission corresponding to the first request.

In embodiments of this application, the access type may be data writing, data deletion, data reading, data access, access policy management, or the like. In addition, the access type in embodiments of this application may alternatively be another type, for example, data modification. This is not specifically limited herein.

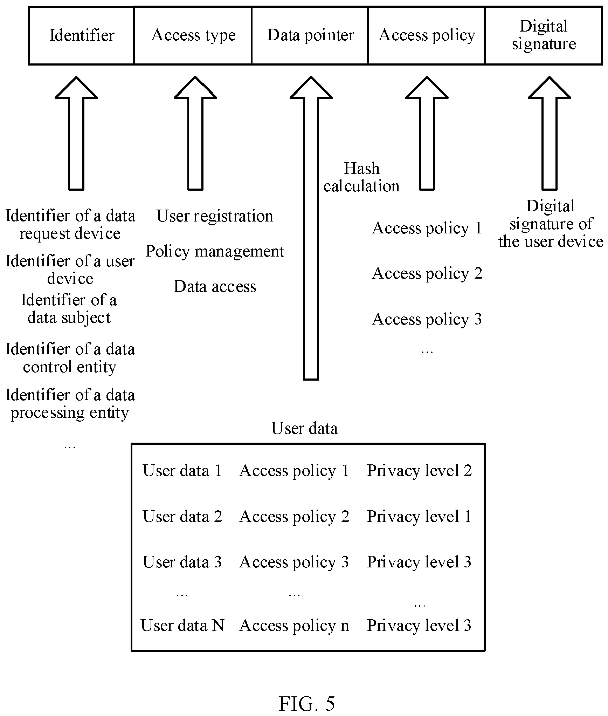

Refer to FIG. 5. In embodiments of this application, the first request includes the signature information of the data request device and the access type. In addition, in embodiments of this application, user device information or related information of a task that a user device requires the data storage device to execute may further be included, and information such as a data access policy and a data pointer of target user data may further be included. For example, when the access type is the data writing, the first request further includes an access address, where the access address may be a data pointer, and the data pointer is obtained, based on the user data, by performing hash calculation by the data request device. This is not specifically limited herein.

In embodiments of this application, the signature information of the data request device may include a signature of the data request device, or may include signature information of the user device, or may include electronic signature information of the data request device and signature information of the user device, or may be other information that can indicate the data request device or the user device. This is not specifically limited herein. In embodiments of this application, the signature information may be an electronic signature, or may be identification information such as an ID. This is not specifically limited herein.

In embodiments of this application, the data request device may be a network device such as a core network element or an access network device. In addition, the data request device may alternatively be a user device such as a terminal. This is not specifically limited herein.

402: The blockchain platform generates proof of permission.

After receiving the first message, the blockchain platform generates the proof of permission based on the signature information of the data request device and the access type that are in the first request in the first message. The proof of permission indicates that the data request device has permission to access the data storage device, and the permission is related to the signature information of the data request device and the access type.

Specifically, after receiving the first request sent by the data request device, the blockchain platform checks the first request based on a preset access policy. In one aspect, the blockchain platform checks permission of the first request. Because the digital signature information has unique authenticity and reliability, that is, the digital signature can uniquely determine the data request device, the digital signature is used by the blockchain platform to determine whether the first request is a request initiated by the data request device, that is, determine authenticity of the first request, and determine whether the first request is sent by the data request device, and whether a user corresponding to the user data knows and whether the user data is confirmed by the user, so that the permission corresponding to the first request can be determined.

In another aspect, the blockchain platform checks, based on a preset target access policy, whether the permission of the first request meets a permission requirement corresponding to a task that needs to be executed by the blockchain platform. Because user data stored in the data storage device has a corresponding privacy level, the user may set the privacy level corresponding to the user data. User data of different privacy levels has different requirements on permission of an access request. Therefore, the target user data has a corresponding target access policy. For example, user data whose privacy level is greater than 2 is not allowed to be accessed by any device, and user data whose privacy level is 2 is allowed to be accessed only by a user device that serves as the data request device. Therefore, the blockchain determines a privacy level of the user data expected to be accessed in the first request, and then determines whether the permission of the first request meets an access permission requirement corresponding to the privacy level of the user data expected to be access in the first request. That is, the blockchain determines whether the data request device that sends the first request has permission to access the data storage device and enable the data storage device to execute a corresponding task, that is, whether the first request has permission corresponding to a task corresponding to the first request. After the blockchain platform performs check in the two aspects, the blockchain platform can determine the permission of the first request, that is, whether the data request device can access the data storage device.

In embodiments of this application, for whether the data request device can access target data in the data storage device, whether to authorize the first request may be determined based on a plurality of decision factors, that is, whether the data request device can access the target user data in the data storage device is determined. The plurality of decision factors include a blacklist/whitelist, a time period, a privacy level, a type of the data request device, and the like. Specifically, an authorization determining algorithm in embodiments of this application is shown in the following.
Access_control (requestor, time) { If (requestor ∈ Black list) then POLICY = Null;
# A blacklist/whitelist mechanism is that the blockchain platform determines whether related information corresponding to the first request belongs to a specific blacklist, for example, the first request is initiated by a specific application of a user device, and if the blockchain platform determines, based on the first request, that the software belongs to an application in the blacklist, the blockchain platform does not authorize the first request;
If (requestor ∈ LBS) then POLICY.location_permission = 1;
# If the blockchain platform determines that a location based service (Location Based Service, LBS) can be provided for the first request, the blockchain platform determines that the data request device can access user location information;
If (requestor.privacy > privacy _level) then POLICY.home_add_permission = 0;
# In embodiments of this application, whether to authorize the first request may be determined based on whether a privacy level corresponding to the first request meets a privacy level requirement of the target user data; and in a possible implementation, if the privacy level corresponding to the first request is higher than a privacy level corresponding to the target user data, the blockchain platform determines that the data request device can access user home address information in the data storage device;
If (time E specific_time) then POLICY.location_permission = 0;
# Whether to authorize the first request is determined based on an event, and specifically, if a current time point is an off-duty time point, the blockchain platform determines that the data request device cannot access user geographical location information in the data storage device;
If (requestor == data_owner) then POLICY = Full;
# Whether to authorize the first request is determined based on the type of the data request device, for example, if an initiator of the first request is a user of the user device, the first request can access all user data, that is, the data request device can access all the user data in the data storage device;
return POLICY }

In embodiments of this application, for whether the data request device can access the target data in the data storage device, whether to authorize the data request device may be determined based on a plurality of decision factors, that is, whether the data request device can access the data storage device is determined. The plurality of decision factors include a blacklist/whitelist, a time period, a privacy level, and a type of the data request device. In addition, another decision factor may also be included. This is not specifically limited herein.

In embodiments of this application, if the blockchain platform determines that the data request device can access the data storage device, the blockchain platform generates proof of permission (proof of permission, POP), where the proof of permission indicates that the data request device has permission to access the data storage device.

Specifically, the blockchain platform generates, based on an identifier of the data request device, an identifier of the data storage device, an identifier of the network operator, and a block hash value, the proof of permission by performing a hash operation. The block hash value is a hash value of a block in which a target transaction is located. The target transaction means that the data request device accesses the data storage device.

For example, a first hash value, hash = Hash (DS_ID, DC_ID, DP_ID,Block hash); and the proof of permission POP = Sign (hash + timestamp, sk0). hash represents the first hash value, DS_ID represents the identifier of the data storage device, DC_ID represents an identifier of a data controller, and the data controller is a collector of user data. For example, DC_ID may represent an identifier of a network operator. DP_ID represents an identifier of a data processor, for example, an identifier of a third-party service provider. The third-party service provider has to depend on user information of a data controller. Block hash represents a block hash value. Timestamp represents the timestamp. sk0 represents a private key in an operator key. In embodiments of this application, the blockchain platform performs the hash operation based on DS_ID, DC_ID, DP_ID, and Block hash to obtain the first hash value, then adds the first hash value and the timestamp, and a result obtained by adding the first hash value and the timestamp is encrypted by using the operator private key, to obtain the proof of permission.

In a possible implementation, if the blockchain platform determines that the data request device cannot access the data storage device, that is, the first request does not have corresponding permission, the blockchain platform does not generate the proof of permission.

403: The blockchain platform sends first permission information to the data request device.

If the blockchain platform determines that the data request device can access the data storage device, the blockchain platform sends the first permission information to the data request device, where the first permission information includes the proof of permission, and the first permission information indicates whether the data request device can access the data storage device.

In a possible implementation, when the access type is the data reading, the first permission information further includes an access address, where the access address may be a data pointer.

If the blockchain platform determines that the data request device cannot access the data storage device, the blockchain platform also sends the first permission information to the data request device. The first permission information does not include the proof of permission. That is, the data request device does not perform step 402 in which the blockchain platform generates the proof of permission. The first permission information indicates that the data request device cannot access the data storage device.

404: The data request device sends a second request to the data storage device.

After the data request device receives the first permission information, if the first permission information indicates that the data request device has the permission to access the data storage device, that is, the first permission information includes the proof of permission, the data request device sends the second request to the data storage device after the data request device learns that the blockchain platform has determined that the data request device can access the data storage device, where the second request indicates the data storage device to execute a task corresponding to the second request. The second request includes the signature information of the data request device, the identifier of the data request device, signature information of the user, a target data address that needs to be accessed, the proof of permission, and the like.

In a possible implementation, the data request device starts timing a waiting time period after sending the second request to the data storage device. If the waiting time period is greater than a preset waiting time period threshold, the data request device determines that a request to access the data storage device is unsuccessful. The waiting time period is a waiting time period elapsing after the data request device sends the second request. To be specific, if the waiting time period elapsing after the data request device sends the second request exceeds the preset waiting time period threshold, and the data request device has not received first acknowledgment information or second acknowledgment information, the data request device determines that the request to access the data storage device is unsuccessful, and therefore, performs a corresponding operation, for example, re-initiates an access request to the data storage device.

405: The data storage device sends an access verification request to the blockchain platform.

After the data storage device receives the second request sent by the data request device, because the second request indicates the data storage device to execute a corresponding task, the data storage device needs to determine whether the second request has permission corresponding to the task. In this case, the data storage device sends the access verification request to the blockchain platform, where the access verification request indicates that the data request device has sent the second request to the data storage device, the access verification request indicates the blockchain platform to determine whether the proof of permission is authentic, and the access verification request includes related information of the second request and the proof of permission, so that the blockchain platform can confirm permission information of the second request based on the related information of the second request and the proof of permission.

406: The blockchain platform sends second permission information to the data storage device. After receiving the access verification request sent by the data storage device, the blockchain platform determines, based on the related information of the second request and the proof of permission that are in the access verification request, whether the second request has corresponding permission, that is, the blockchain platform determines whether the proof of permission is authentic and valid, that is, whether the data storage device can access the data storage device, and then the blockchain platform sends the second permission information to the data storage device, where the second permission information may indicate that the data storage device can execute the task corresponding to the second request, that is, the proof of permission is authentic.

Specifically, in embodiments of this application, a verification algorithm for the proof of permission is shown in the following:
S 1 = Verification (PoP, pk0)
hash, timestamp = parse (PoP)
hash local = Hash (DS_ID, DC_ID, DP_ID, Block hash)
current time = time ()
If (hash = hash local) && (S 1 == true) && (current time - timestamp < delta) then
   out = true
else
   out = false
endif
return out

In the foregoing algorithm, the proof of permission POP is an input of the algorithm, out represents an output of the algorithm, and delta represents a preset time interval, that is, a valid time period of the POP.

In a possible implementation, if the blockchain platform determines, after checking the proof of permission, that the proof of permission is not authentic and valid, the blockchain platform still sends the second permission information to the data storage device, where the second permission information indicates that the data storage device cannot execute the task corresponding to the second request.

407: The data storage device sends first acknowledgment information.

After receiving the second permission information sent by the blockchain platform, the data storage device sends the first acknowledgment message to the data request device, where the first acknowledgment message indicates the data storage device to allow access by the data request device.

Specifically, after the data storage device receives the second permission information sent by the blockchain platform, if the data storage device determines, based on the second permission information, that the proof of permission is authentic and valid, the data storage device sends the first acknowledgment information to the data request device, where the first acknowledgment information indicates the data storage device to allow the access by the data request device. Correspondingly, after the data request device receives the first acknowledgment information sent by the data storage device, the data request device may perform a corresponding response operation. If the data storage device determines, based on the second permission information, that the proof of permission is not authentic and valid, the data storage device sends the first acknowledgment information to the data request device, where the first acknowledgment information indicates that the data storage device rejects the access by the data request device. Correspondingly, after the data request device receives the first acknowledgment information sent by the data storage device, the data request device may perform a corresponding response operation. For example, after the data request device receives the first acknowledgment information sent by the data storage device, if the first acknowledgment information indicates that the data storage device rejects the access by the data request device, the data request device stops waiting for the data storage device to execute the task corresponding to the second request, and re-initiates an access request to the data storage device.

In a possible implementation, the data storage device determines, based on the second permission information, that the proof of permission is authentic and valid, and the data storage device may not send the first acknowledgment information to the data request device, that is, may start to perform step 408 without performing step 407. This is not limited herein.

408: The data storage device executes the task corresponding to the second request.

After the data storage device receives the second permission information sent by the blockchain platform, the second permission information indicates that the data storage device can execute the task corresponding to the second request, that is, indicates that the proof of permission is authentic and valid, to be specific, indicates whether permission of a user device corresponding to the signature information included in the second request can enable the data storage device to execute the task corresponding to the second request. If the second permission information indicates that the data storage device can execute the task corresponding to the second request, the data storage device can execute, after receiving the second permission information, the task corresponding to the second request.

Specifically, in a possible implementation, when a user needs to access personal user data, the following steps may be performed: The data storage device receives the second permission information, and after confirming that the task corresponding to the second request can be executed, the data storage device sends, to the data request device based on the second request, user data corresponding to the second request. A data address may be provided using the foregoing data pointer.

409: The data storage device sends access response information to the blockchain platform.

After completing executing the task corresponding to the second request, the data storage device sends the access response information to the blockchain platform, where the access response information indicates that the data storage device has completed the task corresponding to the second request. The access response information includes related information of the task, for example, result information of the task corresponding to the second request, identification information of a user who initiates the task, an execution policy for the task, and related information of the data storage device that executes the task.

410: The blockchain platform receives the access response information and records the access response information in the distributed ledger.

The blockchain platform receives the access response information sent by the data storage device, where the access response information indicates that the data storage device has completed the task corresponding to the second request. Correspondingly, the access response information includes the related information of the task, for example, the result information of the task, the identification information of the user who initiates the task, the execution policy for the task, and the related information of the data storage device that executes the task. Then, the blockchain platform may broadcast the related information of the task to each node of the blockchain platform. After all nodes reach a consensus, the blockchain platform records the related information of the task in the immutable distributed ledger of the blockchain platform. Each node of the blockchain platform records complete related information of the task, and storage of each node is independent and has a same status.

411: The data storage device sends second acknowledgment information to the data request device. The data storage device sends the second acknowledgment message to the data request device, where the acknowledgment message indicates that the data storage device has completed the task corresponding to the second request.

In embodiments of this application, the data storage device may first perform step 409, and then perform step 411. Alternatively, step 411 may be performed before step 409 is performed, or the two steps may be performed simultaneously. This is not specifically limited herein.

In embodiments of this application, when the data request device needs to perform an operation on data, the data request device needs to obtain the first permission information sent by the blockchain platform, so that risks of a single point of failure and a network attack can be avoided, and there is high data security. In addition, because the first request sent by the data request device includes the signature information of the data request device, it is ensured that the current operation is authorized by the user, and it is ensured that the user can learn whether a mobile communications network provider uses the user information in compliance with requirements, to effectively ensure user information security. In addition, each piece of user data can be set with access permission by determining a privacy level, to implement refined access control and management on the user data. In addition, the proof of permission POP in embodiments of this application is not separately stored in a ledger of a blockchain, so that a delay caused by a consensus mechanism for the blockchain is avoided, and data access performance is improved. In addition, generation of the proof of permission POP depends only on a block hash value and identifiers of a user and a service provider, the proof of permission is not stored in the blockchain, and the generation does not involve a transaction or a consensus protocol.

In embodiments of this application, the data request device may initiate an access request for the user data. In addition, the data request device may alternatively initiate modification of an access policy for the user data. Details are described in the following. 2. The data request device may alternatively initiate the modification of the access policy for the user data.

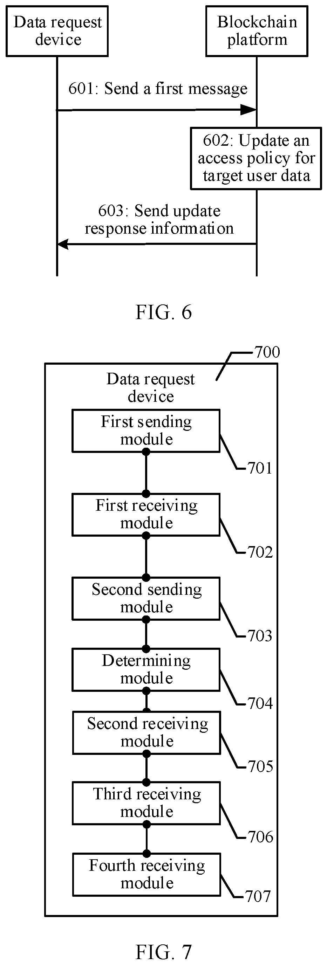

As shown in FIG. 6, a procedure of a user data management method according to an embodiment of this application includes the following steps.

601: The data request device sends a first message to the blockchain platform.

The data request device sends the first message to the blockchain platform, where the first message further includes a policy update request, and the policy update request indicates that a user device needs to modify an access policy for target user data. In embodiments of this application, the data request device is the user device. The policy update request includes identification information of the user device, digital signature information of a user, a first access policy, a data pointer, and a transaction type. The first access policy indicates the blockchain platform to update the access policy for the target user data to the first access policy. The digital signature information of the user is digital signature information of a user corresponding to the user device. The data pointer is an address pointer of the target user data.

In embodiments of this application, the first access policy may be a new access policy. For example, user data whose privacy level is greater than 2 is not allowed to be accessed by any device, and user data whose privacy level is 2 is allowed to be accessed only by a user device that serves as the data request device. Alternatively, the first access policy may be a NULL mark, and the NULL mark indicates the user device to revoke access permission for the target user data, that is, the user device does not allow another device to access the target user data. In addition, the first access policy in embodiments of this application may alternatively be another type of access policy. This is not specifically limited herein.

In embodiments of this application, the signature information may be an electronic signature, or may be identification information such as an ID. This is not specifically limited herein.

602: The blockchain platform updates the access policy for the target user data.

If the blockchain platform determines that the policy update request in the first message sent by the data request device is authentic and valid, the blockchain platform updates the access policy for the target user data based on the policy update request.

Specifically, after receiving the policy update request sent by the user device, the blockchain platform determines, based on the identification information of the user device, the digital signature information of the user, and the transaction type that are included in the policy update request, whether the policy update request is authentic and valid. The digital signature information has unique authenticity and reliability, that is, the digital signature can uniquely determine whether the policy update request is initiated by the user. The identification information of the user device can be used for determining the unique user device. After determining that the policy update request is known and confirmed by the user device, the blockchain platform checks whether the user device has permission to initiate a transaction of the type. The blockchain platform checks the identification information of the user device, the digital signature information of the user, and the transaction type. The blockchain platform may determine permission corresponding to the policy update request, that is, determine whether the user device that sends the policy update request has permission to update the access policy for the target user data.

When the blockchain platform determines that the policy update request sent by the data request device is authentic and valid, the blockchain platform updates the access policy for the target user data based on the first access policy and the data pointer that are in the policy update request. Specifically, the blockchain platform may determine the target user data based on the data pointer, and then determine a second access policy for the target user data. The second access policy is an existing access policy for the target user data. Then, the blockchain platform updates the access policy for the target user data from the second access policy to the first access policy. In addition, during updating, related information of the first access policy is broadcast to each node of the blockchain platform. After all nodes reach a consensus, the blockchain platform records the related information of the first access policy in the immutable distributed ledger of the blockchain platform. Each node of the blockchain platform records complete related information of the task, and storage of each node is independent and has a same status.

There may be a plurality of types of first access policies in embodiments of this application. For example, the first access policy may be that any device can access the target user data; or the first access policy may be that only the user device can access the target user data. In addition, the access policy in embodiments of this application may alternatively be that a privacy level of the target user data is set, and then a device with access permission corresponding to the privacy level is allowed to access the target user data. This is not specifically limited herein.

In a possible implementation, if the blockchain platform determines that the policy update request sent by the data request device is not authentic and valid, the blockchain platform does not update the access policy for the target user data.

603: The blockchain platform sends update response information to the data request device.

The blockchain platform sends the update response information to the data request device, where the update response information indicates that the blockchain platform has updated the access policy for the target user data based on the policy update request sent by the data request device. In a possible implementation, if the blockchain platform determines that the policy update request sent by the data request device is not authentic and valid, the blockchain platform also sends the update response information to the data request device. The update response information indicates that the policy update request is not authentic and valid.

In embodiments of this application, the data request device may modify the access policy for the target user device, and may set an access policy for each piece of user personal data, to implement refined access control on each piece of user personal data.

The following describes the data request device in embodiments of this application. Refer to FIG. 7. An embodiment of this application provides a data request device 700. The data request device may be the data request device in FIG. 4 or FIG. 6. The data request device 700 includes the following modules.

A first sending module 701 is configured to send a first message to a blockchain platform, where the first message includes a first request, the first request indicates that the data request device requests to access a data storage device, and the first request includes signature information of the data request device and an access type. For a specific implementation, refer to step 401 in FIG. 4 in which the data request device sends the first message to the blockchain platform or step 601 in FIG. 6 in which the data request device sends the first message to the blockchain platform. Details are not described herein again.

A first receiving module 702 is configured to receive first permission information sent by the blockchain platform, where the first permission information includes proof of permission, the proof of permission indicates that the data request device has permission to access the data storage device, and the permission is related to the signature information of the data request device and the access type. For a specific implementation, refer to step 403 in FIG. 4 in which the blockchain platform sends the first permission information to the data request device. Details are not described herein again.

A second sending module 703 is configured to send a second request to the data storage device, where the second request includes an access address and the proof of permission. For a specific implementation, refer to step 404 in FIG. 4 in which the data request device sends the second request to the data storage device. Details are not described herein again.

A determining module 704 is configured to: if a waiting time period is greater than a waiting time period threshold, determine that a request to access the data storage device is unsuccessful, where the waiting time period is a waiting time period elapsing after the data request device sends the second request. For a specific implementation, refer to step 404 in FIG. 4 in which the data request device sends the second request to the data storage device. Details are not described herein again. A second receiving module 705 is configured to receive first acknowledgment information, where the first acknowledgment information indicates the data storage device to allow access by the data request device. For a specific implementation, refer to step 407 in FIG. 4 in which the data storage device sends the first acknowledgment information. Details are not described herein again.

A third receiving module 706 is configured to receive second acknowledgment information sent by the data storage device, where the second acknowledgment information indicates that the data storage device has executed a task corresponding to the second request. For a specific implementation, refer to step 411 in FIG. 4 in which the data storage device sends the second acknowledgment information to the data request device. Details are not described herein again. In a possible implementation, the first message further includes a policy update request, the policy update request indicates that the data request device needs to update an access policy for target user data, and the policy update request includes a signature of the data request device and a first access policy. For a specific implementation, refer to step 601 in FIG. 6 in which the data request device sends the policy update request to the blockchain platform. Details are not described herein again. The data request device further includes:
a fourth receiving module 707, configured to receive an update response message, where the update response message indicates that the access policy for the target user data has been updated to the first access policy. For a specific implementation, refer to step 603 in FIG. 6 in which the blockchain platform sends the update response information to the data request device. Details are not described herein again.

In this embodiment, the data request device 700 may perform an operation performed by the data request device in any one of embodiments shown in FIG. 4 or FIG. 6. Details are not described herein again.

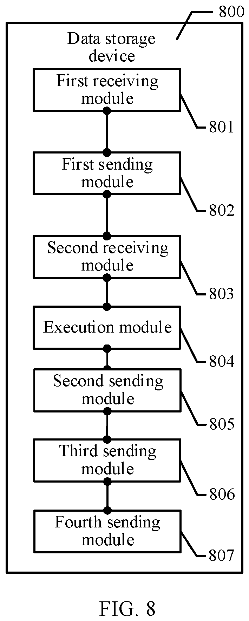

The following describes the data storage device in embodiments of this application. Refer to FIG. 8. An embodiment of this application provides a data storage device 800. The data storage device may be the data storage device in FIG. 4 or FIG. 6. The data storage device 800 includes the following modules.

A first receiving module 801 is configured to receive a second request of a data request device, where the second request includes an access address and proof of permission. For a specific implementation, refer to step 404 in FIG. 4 in which the data request device sends the second request to the data storage device. Details are not described herein again.

A first sending module 802 is configured to send an access verification request to a blockchain platform, where the access verification request indicates the blockchain platform to determine whether the proof of permission is authentic, and the access verification request includes the proof of permission. For a specific implementation, refer to step 405 in FIG. 4 in which the data storage device sends the access verification request to the blockchain platform. Details are not described herein again.

A second receiving module 803 is configured to receive second permission information sent by the blockchain platform, where the second permission information indicates whether the proof of permission is authentic. For a specific implementation, refer to step 406 in FIG. 4 in which the blockchain platform sends the second permission information to the data storage device. Details are not described herein again.

An execution module 804 is configured to execute a corresponding task based on the second request if the second permission information indicates that the data storage device can execute the task corresponding to the second request. For a specific implementation, refer to step 408 in FIG. 4 in which the data storage device receives the second permission information and executes the task corresponding to the second request. Details are not described herein again.

A second sending module 805 is configured to send first acknowledgment information to the data request device, where the first acknowledgment information indicates the storage device to allow access by the data request device. For a specific implementation, refer to step 407 in FIG. 4 in which the data storage device sends the first acknowledgment information. Details are not described herein again.

A third sending module 806 is configured to send access response information to the blockchain platform, where the access response information indicates that the data storage device has executed the task corresponding to the second request. For a specific implementation, refer to step 409 in FIG. 4 in which the data storage device sends the access response information to the blockchain platform. Details are not described herein again.

A fourth sending module 807 is configured to send second acknowledgment information to the data request device, where the second acknowledgment information indicates that the data storage device has executed the task corresponding to the second request. For a specific implementation, refer to step 411 in FIG. 4 in which the data storage device sends the second acknowledgment information to the data request device. Details are not described herein again.

In this embodiment, the data storage device 800 may perform an operation performed by the data storage device in any one of embodiments shown in FIG. 4 or FIG. 6. Details are not described herein again.

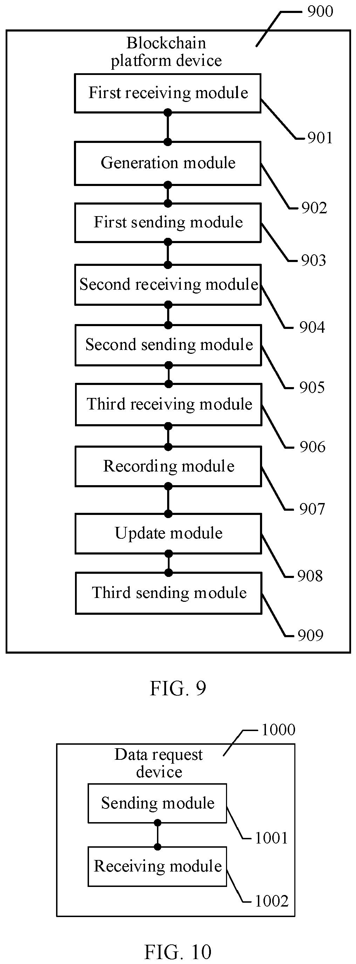

The following describes a blockchain platform device in embodiments of this application. Refer to FIG. 9. An embodiment of this application provides a blockchain platform device 900. The blockchain platform device may be the blockchain platform device in FIG. 4. The blockchain platform device 900 includes the following modules.

A first receiving module 901 is configured to receive a first message, where the first message includes a first request, the first request indicates that a data request device requests to access a data storage device, and the first request includes signature information of the data request device and an access type. For a specific implementation, refer to step 401 in FIG. 4 in which the data request device sends the first request to the blockchain platform. Details are not described herein again.

A generation module 902 is configured to generate proof of permission based on the first request, where the proof of permission indicates that the data request device has permission to access the data storage device. For a specific implementation, refer to step 402 in FIG. 4 in which the blockchain platform generates the proof of permission. Details are not described herein again.

In a possible implementation, the generation module is specifically configured to:
generate, based on an identifier of the data request device, an identifier of the data storage device, and a block hash value, the proof of permission by performing a hash operation, where the block hash value is a hash value of a block corresponding to the data request device. A first sending module 903 is configured to send first permission information, where the first permission information includes the proof of permission. For a specific implementation, refer to step 403 in FIG. 4 in which the blockchain platform sends the first permission information to the data request device. Details are not described herein again.

A second receiving module 904 is configured to receive an access verification request, where the access verification request indicates the blockchain platform to determine whether the proof of permission is authentic, and the access verification request includes the proof of permission. For a specific implementation, refer to step 405 in FIG. 4 in which the data storage device sends the access verification request to the blockchain platform. Details are not described herein again.

A second sending module 905 is configured to send second permission information, where the second permission information indicates that the proof of permission is authentic. For a specific implementation, refer to step 406 in FIG. 4 in which the blockchain platform sends the second permission information to the data storage device. Details are not described herein again.

A third receiving module 906 is configured to receive access response information sent by the data storage device, where the access response information indicates that the data storage device has executed a task corresponding to a second request. For a specific implementation, refer to step 409 in FIG. 4 in which the data storage device sends the access response information to the blockchain platform. Details are not described herein again.

A recording module 907 is configured to record, into a distributed ledger based on the access response message, the task that corresponds to the second request and that has been executed by the data storage device. For a specific implementation, refer to step 410 in FIG. 4 in which the blockchain platform receives the access response information and records the access response information in the distributed ledger. Details are not described herein again.

In a possible implementation, the first message further includes a policy update request, the policy update request indicates that the data request device needs to update an access policy for target user data, and the policy update request includes a signature of the data request device and a first access policy. For a specific implementation, refer to step 601 in FIG. 6 in which the data request device sends the policy update request to the blockchain platform. Details are not described herein again. The blockchain platform device further includes the following modules.

An update module 908 is configured to update the access policy for the target user data to the first access policy based on the signature of the data request device and the first access policy. For a specific implementation, refer to step 602 in FIG. 6 in which the blockchain platform updates the access policy for the target user data. Details are not described herein again.

A third sending module 909 is configured to send an update response message to the data request device, where the update response information indicates that the blockchain platform has updated the access policy for the target user data.

In this embodiment, the blockchain platform device 900 may perform an operation performed by the blockchain platform device in any one of embodiments shown in FIG. 4 or FIG. 6. Details are not described herein again.

The following describes a data request device in embodiments of this application. Refer to FIG. 10. An embodiment of this application provides a data request device 1000. The data request device may be the data request device in FIG. 6. The data request device 1000 includes the following modules.

A sending module 1001 is configured to send a first message to a blockchain platform device, where the first message includes a policy update request, the policy update request indicates that the data request device needs to update an access policy for target user data, and the policy update request includes a signature of the data request device and a first access policy. For a specific implementation, refer to step 601 in FIG. 6 in which the data request device sends the policy update request to the blockchain platform. Details are not described herein again.

A receiving module 1002 is configured to receive an update response message sent by the blockchain platform, where the update response information indicates that the blockchain platform has updated the access policy for the target user data. For a specific implementation, refer to step 603 in FIG. 6 in which the blockchain platform sends the update response information to the data request device. Details are not described herein again.

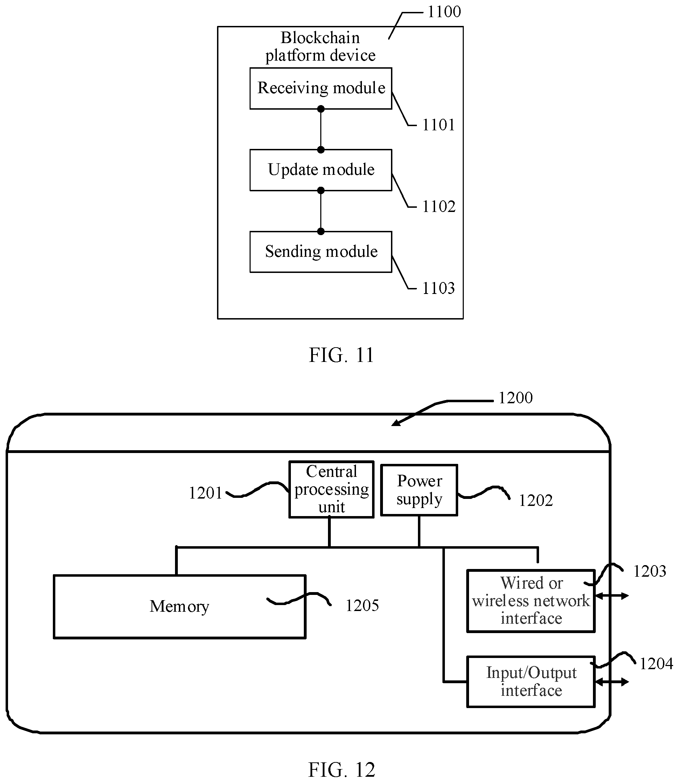

In this embodiment, the data request device 1000 may perform an operation performed by the data request device in any one of embodiments shown in FIG. 6. Details are not described herein again. For a specific implementation, refer to step 603 in FIG. 6 in which the blockchain platform sends the update response information to the data request device. Details are not described herein again. The following describes a blockchain platform device in embodiments of this application. Refer to FIG. 11. An embodiment of this application provides a blockchain platform device 1100. The blockchain platform device may be the blockchain platform device in FIG. 6. The blockchain platform device 1100 includes the following modules.

A receiving module 1101 is configured to receive a first message sent by a data request device, where the first message includes a policy update request, the policy update request indicates that the data request device needs to update an access policy for target user data, and the policy update request includes a signature of the data request device and a first access policy. For a specific implementation, refer to step 601 in FIG. 6 in which the data request device sends the policy update request to the blockchain platform. Details are not described herein again.

An update module 1102 is configured to update the access policy for the target user data to the first access policy based on the signature of the data request device and the first access policy. For a specific implementation, refer to step 602 in FIG. 6 in which the blockchain platform updates the access policy for the target user data. Details are not described herein again.

A sending module 1103 is configured to send an update response message to the data request device, where the update response information indicates that the blockchain platform has updated the access policy for the target user data. For a specific implementation, refer to step 603 in FIG. 6 in which the blockchain platform sends the update response information to the data request device. Details are not described herein again.

In this embodiment, the blockchain platform device 1100 may perform an operation performed by the blockchain platform device in any one of embodiments shown in FIG. 6. Details are not described herein again.

FIG. 12 is a schematic diagram of a structure of a data request device according to an embodiment of this application. The data request device 1200 may include one or more processors 1201 and memories 1205. The memory 1205 stores one or more application programs or data. In some implementation solutions, the memory 1205 may alternatively be integrated with the processor 1201. In some other implementation solutions, the memory is located outside a chip, and is connected to the processor 1201 through a circuit or an interface. The processor 1201 may be a central processing unit (central processing unit, CPU) (where, similarly, a processor in another device in the following may also be a CPU, and details are not described).

The memory 1205 may be volatile storage or persistent storage. A program stored in the memory 1205 may include one or more modules, and each module may include a series of instruction operations on the data request device. Further, the processor 1201 may be configured to communicate with the memory 1205, and perform, on the data request device 1200, a series of instruction operations in the memory 1205.

The processor 1201 is configured to execute a computer program in the memory 1205, so that the data request device 1200 is configured to perform the following operations: The data request device sends a first message, where the first message includes a first request, the first request indicates that the data request device requests to access a data storage device, and the first request includes signature information of the data request device and an access type. The data request device receives first permission information, where the first permission information includes proof of permission, the proof of permission indicates that the data request device has permission to access the data storage device, and the permission is related to the signature information of the data request device and the access type. The data request device sends a second request, where the second request includes an access address and the proof of permission. For a specific implementation, refer to steps 401 to 411 in the embodiment shown in FIG. 4. Details are not described herein again.

The data request device 1200 may further include one or more power supplies 1202, one or more wired or wireless network interfaces 1203, one or more input/output interfaces 1204, and/or one or more operating systems, such as Windows ServerTM, Mac OS XTM, UnixTM, LinuxTM, and FreeBSDTM.

The data request device 1200 may perform an operation performed by the data request device in any one of embodiments shown in FIG. 4. Details are not described herein again.

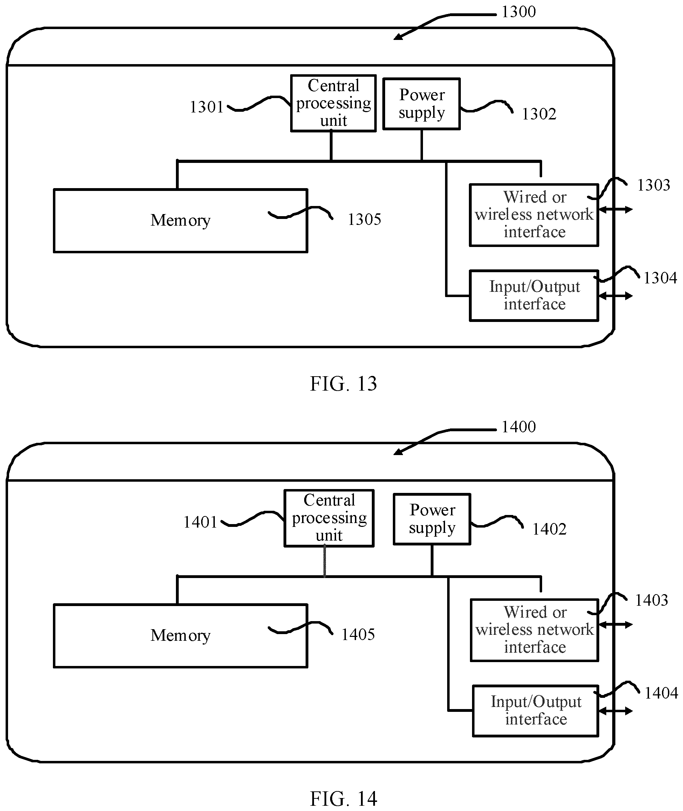

FIG. 13 is a schematic diagram of a structure of a data storage device according to an embodiment of this application. The data storage device 1300 may include one or more processors 1301 and memories 1305. The memory 1305 stores one or more application programs or data.

The memory 1305 may be volatile storage or persistent storage. A program stored in the memory 1305 may include one or more modules, and each module may include a series of instruction operations on the data storage device. Further, the processor 1301 may be configured to communicate with the memory 1305, and execute, on the data storage device 1300, a series of instruction operations in the memory 1305.

The processor 1301 is configured to execute a computer program in the memory 1305, so that the data storage device 1300 is configured to perform the following operations: The data storage device receives a second request sent by a data request device, where the second request includes an access address and proof of permission. The data storage device sends an access verification request to a blockchain platform, where the access verification request indicates the blockchain platform to determine whether the proof of permission is authentic, and the access verification request includes the proof of permission. The data storage device receives second permission information sent by the blockchain platform, where the second permission information indicates that the proof of permission is authentic. The data storage device executes a corresponding task based on the second request. For a specific implementation, refer to steps 401 to 411 in embodiments shown in FIG. 4. Details are not described herein again.

The data storage device 1300 may further include one or more power supplies 1302, one or more wired or wireless network interfaces 1303, one or more input/output interfaces 1304, and/or one or more operating systems, such as Windows ServerTM, Mac OS XTM, UnixTM, LinuxTM, and FreeBSDTM.

The data storage device 1300 may perform an operation performed by the data storage device in any one of embodiments shown in FIG. 4 to FIG. 8. Details are not described herein again.

FIG. 14 is a schematic diagram of a structure of a blockchain platform device according to an embodiment of this application. The blockchain platform device 1400 may include one or more processors 1401 and memories 1405. The memory 1405 stores one or more application programs or data.

The memory 1405 may be volatile storage or persistent storage. A program stored in the memory 1405 may include one or more modules, and each module may include a series of instruction operations on the blockchain platform device. Further, the processor 1401 may be configured to communicate with the memory 1405, and execute, on the blockchain platform device 1400, a series of instruction operations in the memory 1405.

The processor 1401 is configured to execute a computer program in the memory 1405, so that the blockchain platform device 1400 is configured to perform the following operations: The blockchain platform receives a first message, where the first message includes a first request, the first request indicates that a data request device requests to access a data storage device, and the first request includes signature information of the data request device and an access type. The blockchain platform generates proof of permission based on the first request, where the proof of permission indicates that the data request device has permission to access the data storage device. The blockchain platform sends first permission information, where the first permission information includes the proof of permission. The blockchain platform receives an access verification request, where the access verification request indicates the blockchain platform to determine whether the proof of permission is authentic, and the access verification request includes the proof of permission. The blockchain platform sends second permission information, where the second permission information indicates that the proof of permission is authentic. For a specific implementation, refer to steps 401 to 411 in embodiments shown in FIG. 4. Details are not described herein again.

The blockchain platform device 1400 may further include one or more power supplies 1402, one or more wired or wireless network interfaces 1403, one or more input/output interfaces 1404, and/or one or more operating systems, such as Windows ServerTM, Mac OS XTM, UnixTM, LinuxTM, and FreeBSDTM.

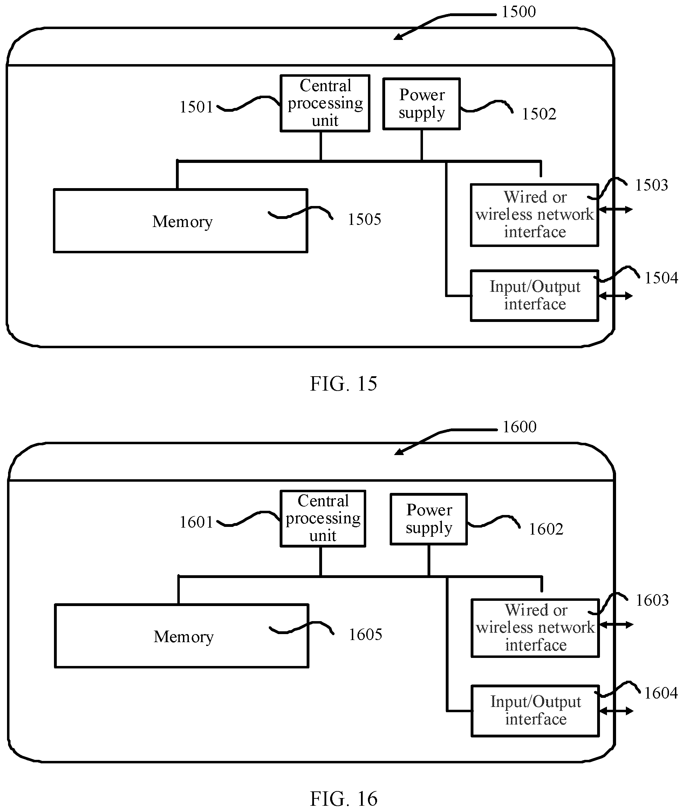

The blockchain platform device 1400 may perform an operation performed by the blockchain platform device in any one of embodiments shown in FIG. 4. Details are not described herein again. FIG. 15 is a schematic diagram of a structure of a data request device according to an embodiment of this application. The data request device 1500 may include one or more processors 1501 and memories 1505. The memory 1505 stores one or more application programs or data. In some implementation solutions, the memory 1505 may alternatively be integrated with the processor 1501. In some other implementation solutions, the memory is located outside a chip, and is connected to the processor 1501 through a circuit or an interface. The processor 1501 may be a central processing unit (central processing unit, CPU) (where, similarly, a processor in another device in the following may also be a CPU, and details are not described).

The memory 1505 may be volatile storage or persistent storage. A program stored in the memory 1505 may include one or more modules, and each module may include a series of instruction operations on the data request device. Further, the processor 1501 may be configured to communicate with the memory 1505, and execute, on the data request device 1500, a series of instruction operations in the memory 1505.

The processor 1501 is configured to execute a computer program in the memory 1505, so that the data request device 1500 is configured to perform the following operations: The data request device sends a policy update request to a blockchain platform, where the policy update request indicates that the data request device requests to update an access policy for target user data, and the policy update request includes a signature of the data request device and a first access policy. The data request device receives an update response message sent by the blockchain platform, where the update response message indicates that the access policy for the target user data has been updated to the first access policy. For a specific implementation, refer to steps 401 to 411 in embodiments shown in FIG. 4. Details are not described herein again.

The data request device 1500 may further include one or more power supplies 1502, one or more wired or wireless network interfaces 1503, one or more input/output interfaces 1504, and/or one or more operating systems, such as Windows ServerTM, Mac OS XTM, UnixTM, LinuxTM, and FreeBSDTM.

The data request device 1500 may perform an operation performed by the data request device in any one of embodiments shown in FIG. 4. Details are not described herein again.

FIG. 16 is a schematic diagram of a structure of a blockchain platform device according to an embodiment of this application. The blockchain platform device 1600 may include one or more processors 1601 and memories 1605. The memory 1605 stores one or more application programs or data.

The memory 1605 may be volatile storage or persistent storage. A program stored in the memory 1605 may include one or more modules, and each module may include a series of instruction operations on the blockchain platform device. Further, the processor 1601 may be configured to communicate with the memory 1605, and execute, on the blockchain platform device 1600, a series of instruction operations in the memory 1605.

The processor 1601 is configured to execute the computer program in the memory 1605, so that the blockchain platform device 1600 is configured to perform the following operations: The blockchain platform receives a policy update request sent by a data request device, where the policy update request indicates that the data request device needs to update an access policy for target user data, and the policy update request includes a signature of the data request device and a first access policy. The method further includes: The blockchain platform updates the access policy for the target user data to the first access policy based on the signature of the data request device and the first access policy. The blockchain platform sends an update response message to the data request device, where the update response information indicates that the blockchain platform has updated the access policy for the target user data. For a specific implementation, refer to steps 601 to 603 in embodiments shown in FIG. 6. Details are not described herein again.

The blockchain platform device 1600 may further include one or more power supplies 1602, one or more wired or wireless network interfaces 1603, one or more input/output interfaces 1604, and/or one or more operating systems, such as Windows ServerTM, Mac OS XTM, UnixTM, LinuxTM, and FreeBSDTM.

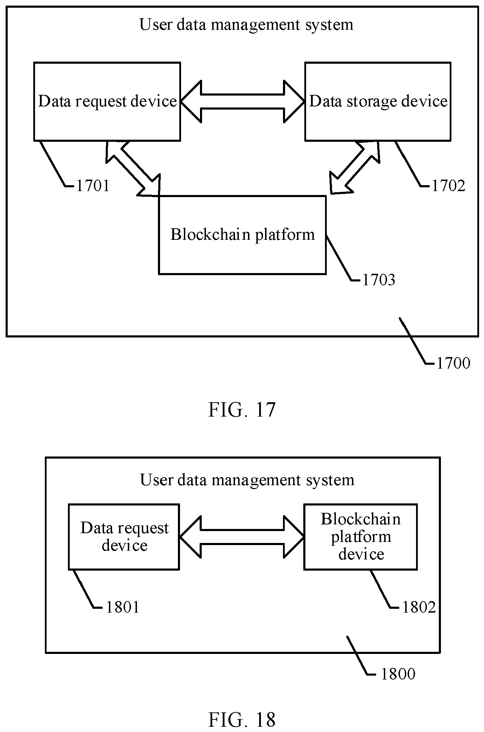

The blockchain platform device 1600 may perform an operation performed by the blockchain platform device in any one of embodiments shown in FIG. 6. Details are not described herein again. FIG. 17 is a schematic diagram of a structure of a user data management system 1700 according to an embodiment of this application. The user data management system 1700 may include a data request device 1701, a data storage device 1702, and a blockchain platform device 1703. The data request device 1701 is configured to perform the following operations: The data request device sends a first message, where the first message includes a first request, the first request indicates that the data request device requests to access the data storage device, and the first request includes signature information of the data request device and an access type. The data request device receives first permission information, where the first permission information includes proof of permission, the proof of permission indicates that the data request device has permission to access the data storage device, and the permission is related to the signature information of the data request device and the access type. The data request device sends a second request, where the second request includes an access address and the proof of permission. For a specific implementation, refer to steps 401 to 411 in embodiments shown in FIG. 4. The data request device 1701 may perform an operation performed by the data request device in any one of embodiments shown in FIG. 4. Details are not described herein again.

The data request device 1702 is configured to perform the following operations: The data storage device receives a second request sent by the data request device, where the second request includes an access address and proof of permission. The data storage device sends an access verification request to the blockchain platform, where the access verification request indicates the blockchain platform to determine whether the proof of permission is authentic, and the access verification request includes the proof of permission. The data storage device receives second permission information sent by the blockchain platform, where the second permission information indicates that the proof of permission is authentic. The data storage device executes a corresponding task based on the second request. For a specific implementation, refer to steps 401 to 411 in embodiments shown in FIG. 4. The data storage device 1702 may perform an operation performed by the data storage device in any one of embodiments shown in FIG. 4. Details are not described herein again.

The blockchain platform device 1703 is configured to perform the following operations: The blockchain platform receives a first message, where the first message includes a first request, the first request indicates that the data request device requests to access the data storage device, and the first request includes signature information of the data request device and an access type. The blockchain platform generates proof of permission based on the first request, where the proof of permission indicates that the data request device has permission to access the data storage device. The blockchain platform sends first permission information, where the first permission information includes the proof of permission. The blockchain platform receives an access verification request, where the access verification request indicates the blockchain platform to determine whether the proof of permission is authentic, and the access verification request includes the proof of permission. The blockchain platform sends second permission information, where the second permission information indicates that the proof of permission is authentic. For a specific implementation, refer to steps 401 to 411 in embodiments shown in FIG. 4. The blockchain platform device 1703 may perform an operation performed by the blockchain platform device in any one of embodiments shown in FIG. 4. Details are not described herein again.

FIG. 18 is a schematic diagram of a structure of a user data management system 1800 according to an embodiment of this application. The user data management system 1800 may include a data request device 1801 and a blockchain platform device 1802.

The data request device 1801 is configured to perform the following operations: The data request device sends a policy update request to the blockchain platform, where the policy update request indicates that the data request device requests to update an access policy for target user data, and the policy update request includes a signature of the data request device and a first access policy. The data request device receives an update response message sent by the blockchain platform, where the update response message indicates that the access policy for the target user data has been updated to the first access policy. For a specific implementation, refer to steps 601 to 603 in embodiments shown in FIG. 6. The data request device 1801 may perform an operation performed by the data request device in any one of embodiments shown in FIG. 6. Details are not described herein again.

The blockchain platform device 1802 is configured to perform the following operations: The blockchain platform receives a policy update request sent by the data request device, where the policy update request indicates that the data request device needs to update an access policy for target user data, and the policy update request includes a signature of the data request device and a first access policy. The method further includes: The blockchain platform updates the access policy for the target user data to the first access policy based on the signature of the data request device and the first access policy. The blockchain platform sends an update response message to the data request device, where the update response information indicates that the blockchain platform has updated the access policy for the target user data. For a specific implementation, refer to steps 601 to 603 in embodiments shown in FIG. 6. The blockchain platform device 1802 may perform an operation performed by the blockchain platform device in any one of embodiments shown in FIG. 6. Details are not described herein again.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that, the disclosed system, apparatus, and method may be implemented in another manner. For example, the described apparatus embodiments are merely examples. For example, division into the units is merely logical function division and may be another division manner during actual implementation. For example, a plurality of units or components may be combined or integrated into another system, or some features may be ignored, or not performed. In addition, the displayed or discussed mutual couplings or direct couplings or communications connections may be implemented through some interfaces. Indirect couplings or communications connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the method described in embodiments of this application. The foregoing storage medium includes: any medium, such as a USB flash drive, a removable hard disk, a read-only memory (ROM, read-only memory), a random access memory (RAM, random access memory), a magnetic disk, or an optical disc, that can store program.

## Claims

1. A user data management method, wherein the method comprises:
sending, by a data request device, a first message, wherein the first message comprises a first request, the first request indicates that the data request device requests to access a data storage device, and the first request comprises signature information of the data request device and an access type;
receiving, by the data request device, first permission information, wherein the first permission information comprises proof of permission, the proof of permission indicates that the data request device has permission to access the data storage device, and the permission is related to the signature information of the data request device and the access type; and
sending, by the data request device, a second request, wherein the second request comprises an access address and the proof of permission.

2. The method according to claim 1, wherein the access type comprises data writing and data reading, wherein
if the access type is the data writing, the first request further comprises the access address; or
if the access type is the data reading, the first permission information further comprises the access address.

3. The method according to claim 1 or 2, wherein after the sending, by the data request device, a second request to the data storage device, the method further comprises:
receiving, by the data request device, first acknowledgment information, wherein the first acknowledgment information indicates the data storage device to allow access by the data request device.

4. The method according to claim 3, wherein after the receiving, by the data request device, first acknowledgment information, the method further comprises:
receiving, by the data request device, second acknowledgment information, wherein the second acknowledgment information indicates that the data storage device has executed a task corresponding to the second request.

5. The method according to claim 4, wherein the method further comprises:
if a waiting time period is greater than a waiting time period threshold, determining, by the data request device, that a request to access the data storage device is unsuccessful, wherein the waiting time period is a waiting time period elapsing after the data request device sends the second request.

6. The method according to claim 1, wherein the first message further comprises a policy update request, the policy update request indicates that the data request device needs to update an access policy for target user data, the policy update request comprises a signature of the data request device and a first access policy, and the method further comprises:
receiving, by the data request device, an update response message, wherein the update response message indicates that the access policy for the target user data has been updated to the first access policy.

7. The method according to any one of claims 1 to 6, wherein after the receiving, by the data request device, acknowledgment information sent by the data storage device, the method further comprises:
sending, by the data request device, task result information to a user device, wherein the task result information indicates whether the data request device has completed the task corresponding to a third request.

8. The method according to claim 7, wherein the signature information of the data request device comprises signature information of the user device.

9. A user data management method, wherein the method comprises:
receiving, by a data storage device, a second request, wherein the second request comprises an access address and proof of permission;
sending, by the data storage device, an access verification request, wherein the access verification request indicates a blockchain platform to determine whether the proof of permission is authentic, and the access verification request comprises the proof of permission;
receiving, by the data storage device, second permission information, wherein the second permission information indicates that the proof of permission is authentic; and
executing, by the data storage device, a corresponding task based on the second request.

10. The method according to claim 9, wherein after the receiving, by the data storage device, second permission information, the method further comprises:
sending, by the data storage device, first acknowledgment information to the data request device, wherein the first acknowledgment information indicates the storage device to allow access by the data request device.

11. The method according to claim 10, wherein after the executing, by the data storage device, a corresponding task based on the second request, the method further comprises:
sending, by the data storage device, access response information to the blockchain platform, wherein the access response information indicates that the data storage device has executed the task corresponding to the second request.

12. The method according to claim 11, wherein after the executing, by the data storage device, a corresponding task based on the second request, the method further comprises:
sending, by the data storage device, second acknowledgment information to the data request device, wherein the second acknowledgment information indicates that the data storage device has executed the task corresponding to the second request.

13. A user data management method, wherein the method comprises:
receiving, by a blockchain platform, a first message, wherein the first message comprises a first request, the first request indicates that a data request device requests to access a data storage device, and the first request comprises signature information of the data request device and an access type;
generating, by the blockchain platform, proof of permission based on the first request, wherein the proof of permission indicates that the data request device has permission to access the data storage device;
sending, by the blockchain platform, first permission information, wherein the first permission information comprises the proof of permission;
receiving, by the blockchain platform, an access verification request, wherein the access verification request indicates the blockchain platform to determine whether the proof of permission is authentic, and the access verification request comprises the proof of permission; and
sending, by the blockchain platform, second permission information, wherein the second permission information indicates that the proof of permission is authentic.

14. The method according to claim 13, wherein the generating, by the blockchain platform, proof of permission based on the first request comprises:
generating, by the blockchain platform based on an identifier of the data request device, an identifier of the data storage device, and a block hash value, the proof of permission by performing a hash operation, wherein the block hash value is a hash value of a block corresponding to the data request device.

15. The method according to claim 14, wherein after the sending, by the blockchain platform, second permission information to the data storage device, the method further comprises:
receiving, by the blockchain platform, access response information sent by the data storage device, wherein the access response information indicates that the data storage device has executed a task corresponding to a second request; and
recording, by the blockchain platform into a distributed ledger based on the access response message, the task that corresponds to the second request and that has been executed by the data storage device.

16. The method according to claim 15, wherein if an access type is data reading, the first permission information comprises an access address.

17. The method according to claim 13, wherein the first message further comprises a policy update request, the policy update request indicates that the data request device needs to update an access policy for target user data, the policy update request comprises a signature of the data request device and a first access policy, and the method further comprises:
updating, by the blockchain platform, the access policy for the target user data to the first access policy based on the signature of the data request device and the first access policy; and
sending, by the blockchain platform, an update response message to the data request device, wherein the update response information indicates that the blockchain platform has updated the access policy for the target user data.

18. A data request device, wherein the data request device comprises:
a first sending module, configured to send a first message, wherein the first message comprises a first request, the first request indicates that the data request device requests to access a data storage device, and the first request comprises signature information of the data request device and an access type;
a first receiving module, configured to receive first permission information, wherein the first permission information comprises proof of permission, the proof of permission indicates that the data request device has permission to access the data storage device, and the permission is related to the signature information of the data request device and the access type; and
a second sending module, configured to send a second request, wherein the second request comprises an access address and the proof of permission.

19. The data request device according to claim 18, wherein the access type comprises data writing and data reading, wherein
if the access type is the data writing, the first request further comprises the access address; or
if the access type is the data reading, the first permission information comprises the access address.

20. The data request device according to claim 18 or 19, wherein the data request device further comprises:
a second receiving module, configured to receive first acknowledgment information, wherein the first acknowledgment information indicates the data storage device to allow access by the data request device.

21. The data request device according to claim 20, wherein the data request device further comprises:
a third receiving module, configured to receive acknowledgment information sent by the data storage device, wherein the acknowledgment information indicates that the data storage device has executed a task corresponding to the second request.

22. The data request device according to claim 21, wherein the data request device further comprises:
a determining module, configured to: if a waiting time period is greater than a waiting time period threshold, determine that a request to access the data storage device is unsuccessful, wherein the waiting time period is a waiting time period elapsing after the data request device sends the second request.

23. The data request device according to claim 18, wherein the first message further comprises a policy update request, the policy update request indicates that the data request device needs to update an access policy for target user data, the policy update request comprises a signature of the data request device and a first access policy, and the data request device further comprises:
a fourth receiving module, configured to receive an update response message, wherein the update response message indicates that the access policy for the target user data has been updated to the first access policy.

24. A data storage device, wherein the data storage device comprises:
a first receiving module, configured to receive a second request, wherein the second request comprises an access address and proof of permission;
a first sending module, configured to send an access verification request, wherein the access verification request indicates a blockchain platform to determine whether the proof of permission is authentic, and the access verification request comprises the proof of permission;
a second receiving module, configured to receive second permission information, wherein the second permission information indicates that the proof of permission is authentic; and
an execution module, configured to execute a corresponding task based on the second request.

25. The data storage device according to claim 24, wherein the data storage device further comprises:
a second sending module, configured to send first acknowledgment information to a data request device, wherein the first acknowledgment information indicates the storage device to allow access by the data request device.

26. The data storage device according to claim 25, wherein the data storage device further comprises:
a third sending module, configured to send access response information to the blockchain platform, wherein the access response information indicates that the data storage device has executed the task corresponding to the second request.

27. The data storage device according to claim 26, wherein the data storage device further comprises:
a fourth sending module, configured to send second acknowledgment information to the data request device, wherein the second acknowledgment information indicates that the data storage device has executed the task corresponding to the second request.

28. A blockchain platform device, wherein the blockchain platform device comprises:
a first receiving module, configured to receive a first message, wherein the first message comprises a first request, the first request indicates that a data request device requests to access a data storage device, and the first request comprises signature information of the data request device and an access type;
a generation module, configured to generate proof of permission based on the first request, wherein the proof of permission indicates that the data request device has permission to access the data storage device;
a first sending module, configured to send first permission information, wherein the first permission information comprises the proof of permission;
a second receiving module, configured to receive an access verification request, wherein the access verification request indicates the blockchain platform to determine whether the proof of permission is authentic, and the access verification request comprises the proof of permission; and
a second sending module, configured to send second permission information, wherein the second permission information indicates that the proof of permission is authentic.

29. The blockchain platform device according to claim 28, wherein the generation module is specifically configured to:
generate, based on an identifier of the data request device, an identifier of the data storage device, and a block hash value, the proof of permission by performing a hash operation, wherein the block hash value is a hash value of a block corresponding to the data request device.

30. The blockchain platform device according to claim 29, wherein the blockchain platform device further comprises:
a third receiving module, configured to receive access response information sent by the data storage device, wherein the access response information indicates that the data storage device has executed a task corresponding to a second request; and
a recording module, configured to record, into a distributed ledger based on the access response message, the task that corresponds to the second request and that has been executed by the data storage device.

31. The blockchain platform device according to claim 28, wherein the first message further comprises a policy update request, the policy update request indicates that the data request device needs to update an access policy for target user data, the policy update request comprises a signature of the data request device and a first access policy, and the blockchain platform device further comprises:
an update module, configured to update the access policy for the target user data to the first access policy based on the signature of the data request device and the first access policy; and
a third sending module, configured to send an update response message to the data request device, wherein the update response information indicates that the blockchain platform has updated the access policy for the target user data.

32. A computer-readable storage medium, wherein the computer-readable storage medium comprises instructions or code; and when the instructions are executed on a computer, the computer is enabled to perform the method according to any one of claims 1 to 8.

33. A computer-readable storage medium, wherein the computer-readable storage medium comprises instructions or code; and when the instructions are executed on a computer, the computer is enabled to perform the method according to any one of claims 9 to 12.

34. A computer-readable storage medium, wherein the computer-readable storage medium comprises instructions or code; and when the instructions are executed on a computer, the computer is enabled to perform the method according to any one of claims 13 to 17.

35. A computer program product, wherein the computer program comprises program code; and when the computer program code is run on a computer, the computer is enabled to perform the method according to any one of claims 1 to 8.

36. A computer program product, wherein the computer program comprises program code; and when the computer program code is run on a computer, the computer is enabled to perform the method according to any one of claims 9 to 12.

37. A computer program product, wherein the computer program comprises program code; and when the computer program code is run on a computer, the computer is enabled to perform the method according to any one of claims 13 to 17.

38. A data request device, comprising a processor and a computer-readable storage medium storing a computer program, wherein
the processor is coupled to the computer-readable storage medium; and when the computer program is executed by the processor, the method according to any one of claims 1 to 8 is implemented.

39. A data storage device, comprising a processor and a computer-readable storage medium storing a computer program, wherein
the processor is coupled to the computer-readable storage medium; and when the computer program is executed by the processor, the method according to any one of claims 9 to 12 is implemented.

40. A blockchain platform device, comprising a processor and a computer-readable storage medium storing a computer program, wherein
the processor is coupled to the computer-readable storage medium; and when the computer program is executed by the processor, the method according to any one of claims 13 to 17 is implemented.

41. A chip system, comprising a processor, wherein the processor is invoked to perform the method according to any one of claims 1 to 8.

42. A chip system, comprising a processor, wherein the processor is invoked to perform the method according to any one of claims 9 to 12.

43. A chip system, comprising a processor, wherein the processor is invoked to perform the method according to any one of claims 13 to 17.

44. A user data management system, wherein the user data management system comprises the data request device according to any one of claims 18 to 23, the data storage device according to any one of claims 24 to 27, and the blockchain platform device according to any one of claims 28 to 31.
